Europäisches Patentamt

European Patent Office

Office européen des brevets

(11) Veröffentlichungsnummer: **0 132 461**
**B1**

(12) **EUROPÄISCHE PATENTSCHRIFT**

(45) Veröffentlichungstag der Patentschrift:
30.03.88

(51) Int. Cl.⁴: **B 62 B 1/12**

(21) Anmeldenummer: 83111855.9

(22) Anmeldetag: 26.11.83

(54) Transportroller.

(30) Priorität: 22.07.83 EP 83107194

(43) Veröffentlichungstag der Anmeldung:
13.02.85 Patentblatt 85/7

(45) Bekanntmachung des Hinweises auf die Patenterteilung:
30.03.88 Patentblatt 88/13

(84) Benannte Vertragsstaaten:
AT BE CH DE FR GB IT LI NL SE

(56) Entgegenhaltungen:
CH - A - 168 803
GB - A - 806 547
US - A - 2 757 935
US - A - 2 872 202
US - A - 3 276 786

(73) Patentinhaber: LEIFHEIT Aktiengesellschaft,
Leifheitstrasse, D-5408 Nassau/Lahn (DE)

(72) Erfinder: Liebscher, Johannes, Dr. Haupt-Weg,
D-5408 Nassau/Lahn (DE)
Erfinder: Ohm, Heinz, Grosser Ring 5,
D-6250 Limburg 9 (DE)

## Beschreibung

Die Erfindung bezieht sich auf einen Transportroller gemäss dem Oberbegriff des Anspruchs 1, wie er aus der US-A 3 276 786 bekannt ist.

Der Standard-Transportroller sieht derzeit so aus, dass auf einem unteren, waagrecht verlaufenden Rahmenbereich auf Querstäben eine Tasche, die über einen Gurt am Tragrahmen gehalten ist, aufliegt. Die Tasche ist innen mit Versteifungspappe ausgekleidet (DE-U 7 637 139 und De-A 2 913 653). Nachteilig an diesen Geräten ist das relativ hohe Leergewicht. Durch die Pappeinlagen entsteht eine zerklüftete Innentasche, die zudem schwer zu reinigen ist. Ein Waschen der Tasche ist dadurch gänzlich ausgeschlossen. Durch die US-A 3 276 786 ist ein Transportroller zum Bewegen des Einkaufgutes aus Supermärkten zum Parkplatz des Autos bekannt. Der Taschenkörper ist einerseits an einen planen Kunststoffboden und andererseits an den Tragrahmen geklebt. Ein Trennen des Taschenkörpers vom Tragrahmen z.B. zur Reinigung ist nicht möglich.

Aufgabe der Erfindung ist es, einen leichten, pflegeleichten dennoch stabilen Transportroller zu schaffen, der einfach herzustellen und zu montieren ist und für den Transport dennoch auf ein verringertes Packmass bringbar ist.

Diese Aufgabe wird mit den Merkmalen des Anspruchs 1 gelöst.

Durch die unmittelbare Verbindung des Taschenkörpers mit einem wannenförmigen Kunststoffteil, das als Taschenboden dient, sind die Querstreben im unteren Bereich entbehrlich. Durch die Ausbildung des Kunststoffteiles als Wanne wird die Festigkeit und insbesondere die Steifigkeit weiter erhöht. Das Kunststoffteil übernimmt gleichzeitig tragende Funktionen quasi wie bei einer selbsttragenden Karosserie eines Autos. Der Taschenkörper selbst kann sehr elastisch gehalten werden, denn durch das Haltespannelement wird die Tasche zuverlässig am Tragrahmen fixiert. Durch die fehlenden Pappversteifungsteile im Innern der Tasche ist diese sogar voll waschbar.

Das Vernähen des Taschenkörpers mit dem wannenförmigen Kunststoffteil ermöglicht eine einfache Fertigung. Die Verbindung ist unempfindlich gegen Feuchtigkeit und Reinigungsmittel.

Die Ausbildung der Wanne mit keilförmigen Seitenwangen und eingeformten Kotflügeln bringt einen zuverlässigen Berührungsschutz gegenüber den Rädern. Ein Ausbeulen der Tasche im unteren Bereich, der zwangsläufig durch Flaschen und Dosen am höchsten belastet ist, wird zuverlässig verhindert.

Die Anordnung von Rastteilen auf der Unterseite des Kunststoffteiles für den unteren Rahmenbereich und/oder die Achse bringt eine zusätzliche Montagevereinfachung.

Weiter lässt sich durch die Ausbildung des Haltespannelementes zum Schiebeelement in besonders einfacher Form das Transportproblem lösen. Durch dieses Schiebeelement kann die Tasche bereits in der Fabrik voll am Tragrahmen montiert werden. Das Schiebeelement wird lediglich etwas abgesenkt, wodurch die Tasche an den Tragrahmen rangefaltet werden kann und mehrere Transportroller L-förmig ineinanderliegend verpackt werden können.

Eine weitere Raumeinsparung beim Transport bringt die Ausbildung des Schiebeelementes als Teleskopverbindungsteil. Dadurch kann zusätzlich der Tragrahmen um annähernd die Hälfte verkürzt werden.

Einige Ausführungsbeispiele der Erfindung werden im folgenden an Hand der Zeichnungen näher erläutert.

Es zeigen:

Figur 1 eine Gesamtansicht eines Transportrollers mit Tasche,

Figur 2 eine Alternativlösung eines Transportrollers mit Tasche, bei dem der Tragrahmen zweiteilig mit einem Teleskopverbindungsteil ausgebildet ist,

Figur 3 eine Seitenansicht des unteren Bereiches eines Transportrollers gemäss Figur 1 oder Figur 2,

Figur 4 einen Schnitt gemäss der Linie IV-IV in Figur 3,

Figur 5 einen Schnitt gemäss der Linie V-V nach Figur 3 und

Figur 6 einen Schnitt gemäss der Linie VI-VI in Figur 6.

An einem Tragrahmen 1 ist am Übergangsbereich 2 zu einem unteren Rahmenbereich 3 eine Achse 4 mit Laufrädern 5 angeordnet. Der untere Rahmenbereich 3 läuft in Stützfüsse 6 aus. Auf dem unteren Rahmenbereich 3 ist eine Tasche 7 aufgesetzt, die über ein Haltespannelement 8, das wiederum an einem Schiebeelement 9 befestigt ist, verschiebbar am Tragrahmen 1 gehalten ist.

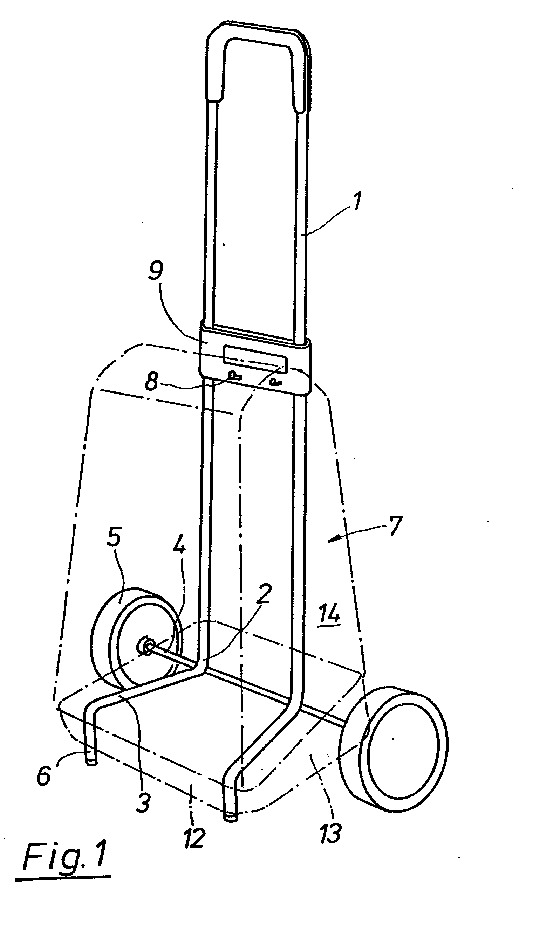

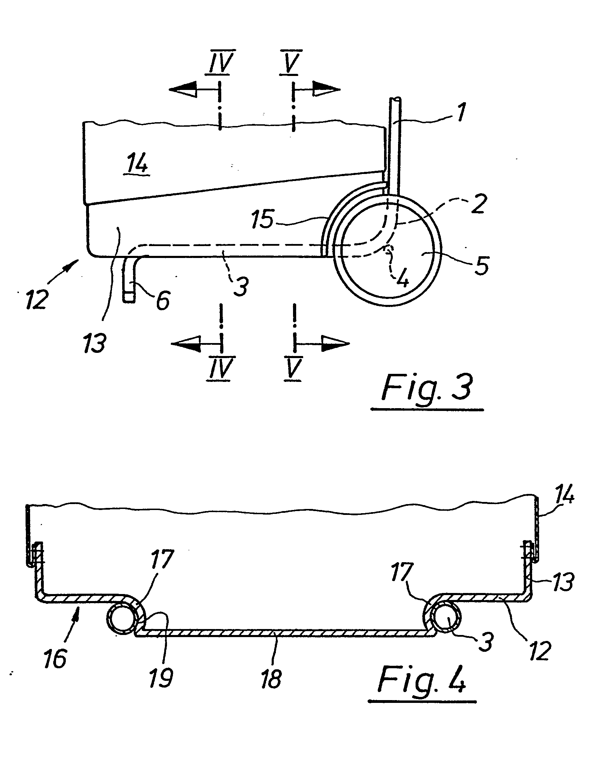

In den Figuren 1, 3 und 4 ist das Kunststoffteil als Wanne 12 ausgebildet. Die Seitenteile 13 der Wanne 12 sind keilförmig ausgeführt, so dass der Taschenkörper 14, er ist an die keilförmige Wanne angepasst, nicht mit dem Rad 5 in Berührung kommen kann. In Figur 3 ist zusätzlich ein Kotflügel 15 vorgesehen. Die Unterseite 16 der Wanne 12 ist mit Rastteilen 17 versehen. Diese Rastteile 17 werden im vorliegenden Beispiel durch eine Ausbuchtung 18 mit Hinterschnitt 19 in der Wanne 12 gebildet.

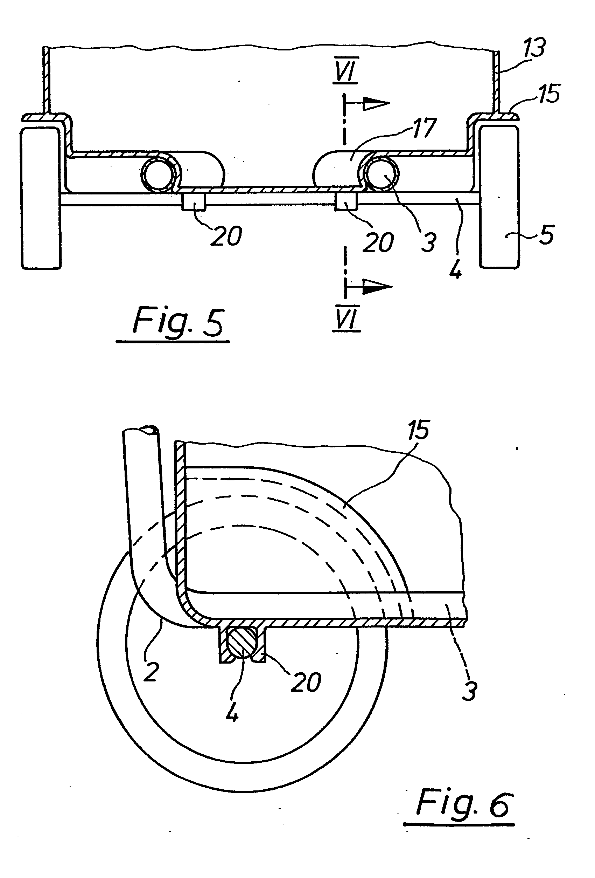

Bei den Ausführungsbeispielen gemäss den Figuren 5 und 6 sind auf der Unterseite 16 zusätzlich Rastteile 20 für die Achse 4 vorgesehen. Diese Rastteile 20 liegen auf der Ausbuchtung 18, so dass sie mit dem unteren Rahmenbereich 3 fluchten.

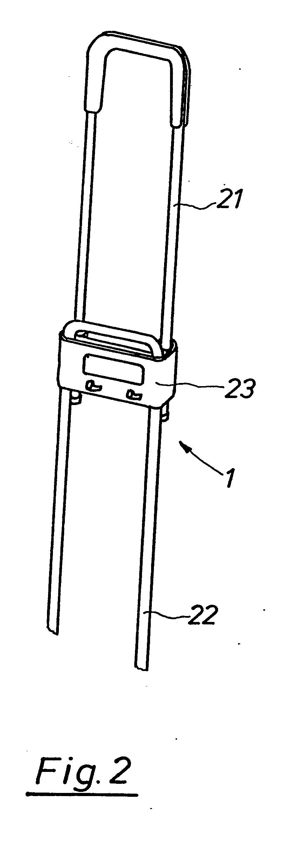

In Figur 2 ist eine Alternativlösung gezeigt. Dabei ist der Tragrahmen 1 zweiteilig ausgeführt. Er besteht aus einem Schiebegriffteil 23 und einem Grundrahmen 22, an dem ein Teleskopverbindungsteil 23 befestigt ist. Dieses Teleskopverbindungsteil 23 lässt sich zusammen mit der Tasche 7 auf dem Grundrahmen 22 verschieben und gestattet zum anderen ein Einschieben des Schiebegriffteiles 21. Dadurch kann einmal der Tragrahmen fast um die Hälfte verkürzt werden und zum anderen ist es möglich, die Tasche ohne abzunehmen einzufalten.

**Patentansprüche**

1. Transportroller mit einem Tragrahmen (1), einer Achse (4), Rädern (5) und einer Tasche (14), die im wesentlichen aus einem Taschenkörper und einem Kunststoffboden besteht, dadurch gekennzeichnet, dass der Kunststoffboden als Wanne (12) ausgebildet und der Taschenkörper (10) an Seitenteile (13) der Wanne (12) angenäht ist, wobei am Taschenkörper (10) ein Haltespannelement (8) zur Verbindung mit dem Tragrahmen (1) vorgesehen ist, und dass in die Wanne (12) Kotflügel (15) und eine Ausbuchtung (18) eingeformt sind.

2. Transportroller nach Anspruch 1, dadurch gekennzeichnet, dass die Wanne (12) in der Seitenansicht keilförmig ausgebildet ist.

3. Transportroller nach einem der Ansprüche 1 oder 2, dadurch gekennzeichnet, dass die Wanne (12) auf ihrer Unterseite (16) mit Rastteilen (17) zur Halterung auf einem unteren Rahmenbereich (3) versehen ist.

4. Transportroller nach Anspruch 3, dadurch gekennzeichnet, dass die Wanne (12) mit zusätzlichen Rastteilen (20) für eine Achse (4) versehen ist.

5. Transportroller nach einem der Ansprüche 1 bis 4, dadurch gekennzeichnet, dass das Haltespannelement (8) über ein Schiebeelement (9) am Tragrahmen (1) befestigt ist.

6. Transportroller nach Anspruch 5, dadurch gekennzeichnet, dass das Schiebeelement gleichzeitig als Teleskopverbindungsteil für einen zweiteiligen Tragrahmen ausgebildet ist.

**Claims**

1. Transport trolley with a supporting frame (1), an axle (4), wheels (5) and a bag (14) consisting essentially of a bag body and a plastic base, characterized in that the plastic base is designed as a trough (12), and the bag body (10) is sewn to side parts (13) of the trough (12), a holding and tensioning element (8) for connection to the supporting frame (1) being provided on the bag body (10), and in that mudguards (15) and a bulge (18) are formed in the trough (12).

2. Transport trolley according to Claim 1, characterized in that the trough (12) is made wedge-shaped, as seen in a side view.

3. Transport trolley according to one of Claims 1 or 2, characterized in that the trough (12) is equipped, on its underside (16), with engagement parts (17) for mounting on a lower frame region (3).

4. Transport trolley according to Claim 3, characterized in that the trough (12) is equipped with additional engagement parts (20) for an axle (4).

5. Transport trolley according to one of Claims 1 to 4, characterized in that the holding and tensioning element (8) is fastened to the supporting frame (1) via a sliding element (9).

6. Transport trolley according to Claim 5, characterized in that the sliding element is designed at the same time as a telescopic connecting part for a two-piece supporting frame.

**Revendications**

1. Chariot de transport muni d'une ossature porteuse (1), d'un axe (4), de roues (5) et d'un sac (14), lequel est essentiellement constitué par un corps de sac et un fond en matière plastique, caractérisé en ce que le fond en matière plastique est conçu sous forme de cuvette (12) et en ce que le corps de sac (10) est cousu sur les parties latérales (13) de la cuvette (12), un élément tendeur de retenue (8) destiné à la liaison avec l'ossature porteuse (1) étant prévu sur le corps de sac (10), et en ce que la cuvette (12) présente des garde-boue (15) et une dépression (18).

2. Chariot de transport selon la revendication 1, caractérisé en ce que la cuvette (12) est en vue latérale conçue en forme de coin.

3. Chariot de transport selon l'une quelconque des revendications 1 ou 2, caractérisé en ce que la cuvette (12) est munie de pièces d'emboîtement (17) sur son côté iférieur (16) destinées à la fixation sur une zone d'ossature inférieure (3).

4. Chariot de transport selon la revendication 3, caractérisé en ce que la cuvette (12) est munie de pièces d'emboîtement supplémentaires (20) pour un axe (4).

5. Chariot de transport selon l'une quelconque des revendications 1 à 4, caractérisé en ce que l'élément tendeur de retenue (8) est fixé sur l'ossature porteuse (1) par l'intermédiaire d'un élément coulissant (9).

6. Chariot de transport selon la revendication 5, caracérisé en ce que l'élément coulissant présente simultanément une conception d'élément de liaison télescopique pour une ossature porteuse en deux parties.

_Fig.1_

21

23

1

22

**_Fig. 2_**

Fig. 3

Fig. 4

*Fig. 5*

*Fig. 6*